# EUROPEAN PATENT SPECIFICATION

(11) **EP 0 599 562 B1**
(45) Date of publication and mention of the grant of the patent: **03.07.1996**
(21) Application number: 93309247.0
(22) Date of filing: 19.11.1993
(51) Int. Cl.: B60C 11/00, B60C 9/20, B60C 19/00, B60C 15/024

(54) **Radial tyre and method of manufacture thereof**
Gürtelreifen und Verfahren zur Herstellung
Pneumatique radial et procédé de fabrication

(30) Priority: 21.11.1992 GB 9224432
(43) Date of publication of application: 01.06.1994
(73) Proprietor: SUMITOMO RUBBER INDUSTRIES LIMITED, Kobe-shi Hyogo-ken (JP)
(72) Inventor: Valera, Yasmin, Handsworth, Birmingham B20 3PG (GB); Williams, Arthur Roger, Solihull, West Midlands (GB)
(74) Representative: Stewart, Charles Geoffrey

(56) References cited:
- EP-A- 0 370 748
- EP-A- 0 370 749
- DE-A- 2 824 348
- PATENT ABSTRACTS OF JAPAN vol. 9, no. 142 (M-388)(1865) 18 June 1985 & JP-A-60 022 506 (YOKOHAMA GOMU)

## Description

This invention relates to a radial tyre and the manufacture of said radial tyre.

With the improvements in vehicle ride has come the requirement for better tyre uniformity particularly in relation to radial run out (RRO) and radial force variation (RFV). The reasons for these uniformity errors are complex but they stem from the basic construction of radial tyres and manufacturing techniques used to build them. Whilst most components are made in long continuous lengths and thus have good cross-sectional uniformity before they are assembled to form a green tyre, the components are cut off to length and jointed to form the circumferential components in the tyre.

These joints in the case of fabric reinforced components may be overlap joints or in the case of steel reinforced components butt joints. In non-reinforced components butt joints sometimes cut at an angle are used. Joints in rubber components may have excess rubber or insufficient rubber in the joint area due to the tolerance on the length cut off and the circumference of the tyre and where the ends are pressed together by the tyre assembler a heavy joint may be the result.

DE-A-2824348 discloses methods for influencing the frequency of vibration of the tyre/wheel/suspension system of a vehicle, which may be actuated by tyre non-uniformity, including concentrating all component joints at two diametrically points or providing specific areas of the tyre with a defined radial run-out.

It is an object of the present invention, however, to mitigate the effects of such joints in tyres and produce a tyre with improved uniformity.

According to one aspect of the present invention a radial tyre comprises components including a tread, a breaker reinforcement under the tread and a carcass of radially extending reinforcement cords, at least one component comprising a strip of circumferentially extending material joined at the ends to form a joint, the reinforcement cords of the carcass being anchored in each of two bead regions by wrapping around a bead core, said bead region being encased in rubber to provide a bead seating region radially inside the bead core for seating onto a wheel rim characterised in that the rubber bead seating region has a smaller thickness of rubber, measured radially of the tyre under the bead core, in a circumferential region radially inward of a zone of the strip circumferentially adjacent to the said joint than the thickness of rubber of that part of the bead seating region radially inward of a zone not circumferentially adjacent to the said joint.

Preferably the reduction of rubber thickness in the bead seating region is between 0.5 and 1.5mm and extends in a circumferential zone of between 10 and 40 degrees around the tyre. Two such zones of reduced rubber thickness may be provided and one of these is preferably under the tread joint.

According to another aspect of the present invention a method of manufacture for a tyre having a zone or region of reduced rubber thickness radially inwards of a bead reinforcement core comprises shaping the radially inner surface of the tyre bead to have an increased radius in a localised region.

The method may comprise removing rubber from the required zone subsequent to moulding the tyre or may comprise moulding the green or raw tyre in a mould having a localised radially protruding zone in the mould at the required region and locating the tyre in the mould prior to moulding with the joint to be compensated for positioned circumferentially adjacent to the said protruding zone.

Further aspects of the invention will become apparent from the following description, by way of example only, of some embodiments in which:-
Figure 1 is a side view of a tyre of the invention;
Figure 2 is a sectional view of the tyre of Figure 1 taken along section S-S;
Figure 3 is an enlarged part scrap sectional view of one of the bead parts of the tyre of Figure 1 taken along section M-M in the vicinity of tread joint TJ; and
Figure 4 is a schematic diagram showing the shape of a part used to form the radially inner surface of a bead of a tyre of the invention.

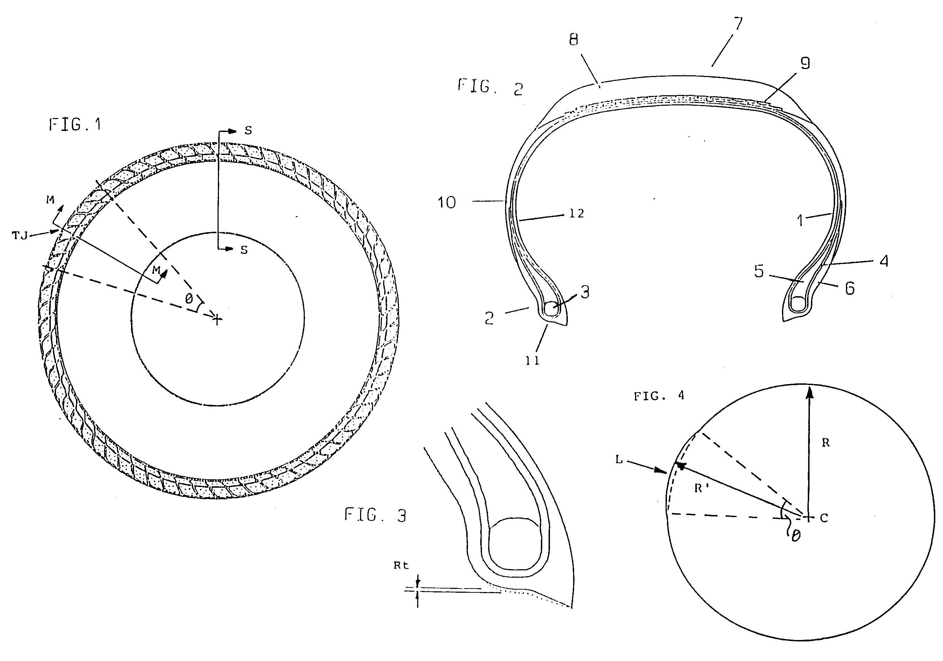

Figure 1 shows a tyre of the present invention and Figure 2 shows a sectional view taken radially along S-S. This tyre comprises a single carcass reinforcing ply 1 extending between a pair of bead regions 2,2 which is outwardly turned at each edge around a bead core or hoop 3 to form a ply turn-up 4. In each bead region 2 a hard rubber apex 5 is disposed on the bead core and between the ply 1 and ply turn-up 4 to stiffen the bead region 2. On the radially outer side of each ply turn-up 4 the tyre has a clinch strip 6 to prevent chafing against the wheel rim. The ground contacting region 7 of the tyre has a rubber tread 8 which is reinforced by a breaker 9 disposed radially between the ply and the tread. Between the tread 8 and bead regions 2 of the tyre the ply 1 is protected by a rubber sidewall 10. On the inside of the tyre is disposed an innerlining 12 comprising a rubber of high impermeability to air and moisture for the purpose of retaining the air used to inflate the tyre.

In the building of the tyre most of the components are cut to the required circumferential length and assembled by wrapping around a former and bringing the two cut ends together to form a joint. Normally the positions of these joints are staggered around the circumference of the tyre to minimise the disturbance to the uniformity of the tyre.

Radially inside each bead core 3, each bead region 2 is encased in rubber to provide a bead seating region 11 of which the radially inner surface contacts the wheel rim when the tyre is fitted.

In the conventional prior art tyre the radial thickness of rubber in the bead seating region 11 at any point under the bead core 3 is arranged to be constant over the entire circumference of the tyre.

In the tyre of the present invention the radial thickness of rubber in the bead seating region 11 under the bead core 3 is arranged to be reduced in the vicinity of a component joint. For example Figure 3 shows an enlarged sectional view of one bead region taken along section M-M at the tread joint TJ shown in Figure 1. The dotted line in Figure 3 shows the corresponding profile of the bead seat inner surface taken along the section S-S in Figure 1 which is not in the vicinity of a component joint. Thus it can be seen that the bead seat rubber thickness under the bead core 3 is reduced by an amount Rt in the vicinity of the tread joint. The value of Rt is preferably in the range 0.5 to 1.5mm. The bead seat rubber thickness may be reduced in only one of the two bead regions but it is preferable that it is reduced in both bead regions in the vicinity of the component joint. It is even more preferable that it is reduced equally in both bead regions.

The reduced bead seat rubber thickness preferably extends in a zone of θ degrees around the circumference of the tyre where θ has a value in the range of 10 to 40 degrees. Towards the edges of the zone the thickness of bead seat rubber is gradually increased so that at the ends of the zone it is the normal thickness.

A method of manufacturing the tyre of the invention comprises moulding the tyre in a mould in which the part which shapes the radially inner surface of the tyre bead has an increased radius in a localised region to form a radially protruding zone in the mould.

Figure 4 shows the shape of such a mould part having a radius R from the centre of the mould C except for a localised region L which has a larger maximum radius R' wherein the difference R'-R between the two radii lies in the range 0.5 to 1.5mm. When the tyre is loaded into the mould the component joint which is to be compensated for is positioned circumferentially adjacent to the point of maximum radius R' in the localised protruding region L. Thus in the subsequent moulding process rubber is displaced from the region of the radially protruding zone in the mould which leaves the tyre having reduced rubber thickness in the bead seat in the region adjacent to the component joint.

The method of manufacturing the tyre may also comprise removing unvulcanised rubber from the tyre bead seat in the required zone prior to moulding. Alternatively the formation of a zone of reduced bead seat rubber thickness may comprise applying a thin strip of rubber compound around part of the circumferential extent of the tyre bead prior to moulding the tyre such that no strip is applied in the zone adjacent to the joint to be compensated for. The tyre may also have vulcanised rubber removed from the bead seat in the required zone after moulding.

## Claims

1. A radial tyre comprising components including a tread (8), a breaker reinforcement (9) under the tread (8) and a carcass of radially extending reinforcement cords, at least one component comprising a strip of circumferentially extending material joined at the ends to form a joint, the reinforcement cords of the carcass being anchored in each of two bead regions (2) by wrapping around a bead core (3), said bead region (3) being encased in rubber to provide a bead seating region (11) radially inside the bead core (3) for seating onto a wheel rim characterised in that the rubber bead seating region (11) has a smaller thickness of rubber, measured radially of the tyre under the bead core (3), in a circumferential region radially inward of a zone of the strip circumferentially adjacent to the said joint than the thickness of rubber of that part of the bead seating region (11) radially inward of a zone not circumferentially adjacent to the said joint.

2. A tyre according to claim 1 characterised in that the said smaller thickness is between 0.5 and 1.5mm smaller.

3. A tyre according to claim 1 or 2 characterised in that the region of smaller thickness extends, in the circumferential direction, for a distance of 10 to 40 degrees around the tyre.

4. A tyre according to claim 1, 2 or 3 characterised in that two such regions of smaller rubber thickness are provided each adjacent a join in one or more tyre components.

5. A tyre according to claim 1, 2, 3 or 4 characterised in that the region of smaller rubber thickness is under the tread joint (TJ).

6. A method of manufacture for a tyre having a region of smaller rubber thickness radially inwards of a bead reinforcement core (3) comprising shaping the radially inner surface of the tyre bead to have an increased radius (R') in a localised region (L).

7. A method of manufacture according to claim 6 characterised in that the increased radius region (L) is manufactured by displacing rubber from the said region of a green tyre carcass.

8. A method according to claim 7 characterised by moulding the green tyre in a mould having a localised radially protruding zone in the mould at the required bead seat forming region and locating the tyre in the mould prior to moulding with the joint to be compensated for positioned circumferentially adjacent to the said protruding zone.

9. A method according to claim 6 or 7 characterised by removing unvulcanised rubber in the required region prior to moulding the green tyre in a mould.

10. A method according to claim 6 characterised by applying a thin strip of rubber compound around part of the circumferential extent of a tyre bead region such that no strip is applied adjacent the joint to be compensated and then moulding the tyre in a mould.

11. A method of manufacture according to claim 6 characterised by removing rubber from the required region subsequent to moulding the tyre.

## Patentansprüche

1. Gürtelreifen, der umfaßt Komponenten einschließlich einer Lauffläche (8), einer Kissenverstärkung (9) unter der Lauffläche (8) und einer Karkasse aus sich radial erstreckenden Verstärkungskorden, wobei zumindest eine Komponente einen Streifen von sich in Umfangsrichtung erstreckendem Material umfaßt, das an den Enden zur Bildung einer Verbindung zusammengefügt ist, wobei die Verstärkungskorde der Karkasse in jedem von zwei Wulstbereichen (2) durch Umwicklung um einen Wulstkern (3) verankert sind, wobei der Wulstbereich (3) in Gummi eingefaßt ist, um einen Wulstsitzbereich (11) radial innerhalb des Wulstkernes (3) zum Sitz auf einer Radfelge zu schaffen,
dadurch **gekennzeichnet,**
daß der Gummiwulstsitzbereich in einem Umfangsbereich (11), der radial innerhalb einer Zone des Streifens liegt, die der Verbindung umfangsmäßig benachbart ist, eine geringere Gummidicke, gemessen in Radialrichtung des Reifens unter dem Wulstkern (3) aufweist, als die Gummidicke desjenigen Teils des Wulstsitzbereiches (11), der radial innerhalb einer Zone liegt, die der Verbindung nicht umfangsmäßig benachbart ist.

2. Reifen nach Anspruch 1,
dadurch **gekennzeichnet,**
daß diese kleinere Dicke zwischen 0,5 und 1,5 mm kleiner ist.

3. Reifen nach Anspruch 1 oder 2,
dadurch **gekennzeichnet,**
daß der Bereich kleinerer Dicke sich in der Umfangsrichtung über eine Entfernung von 10 bis 40° um den Reifen erstreckt.

4. Reifen nach Anspruch 1, 2 oder 3,
dadurch **gekennzeichnet,**
daß zwei solche Bereiche kleinerer Gummidicke jeweils benachbart einer Verbindung von einem oder mehreren Reifenkomponenten vorgesehen ist.

5. Reifen nach Anspruch 1, 2, 3 oder 4,
dadurch **gekennzeichnet,**
daß der Bereich kleinerer Gummidicke unter der Laufflächenverbindung (TJ) liegt.

6. Verfahren zur Herstellung eines Reifens mit einem Bereich geringerer Gummidicke radial innerhalb eines Wulstverstärkungskerns (3), das umfaßt die Formgebung der radial inneren Oberfläche des Reifenwulstes derart, daß sie einen erhöhten Radius (R') in einem örtlichen Bereich (L) aufweist.

7. Verfahren zur Herstellung nach Anspruch 6,
dadurch **gekennzeichnet,**
daß der Bereich erhöhten Radius' (L) durch eine Verschiebung von Gummi aus diesem Bereich einer Karkasse eines Reifenrohlings hergestellt wird.

8. Verfahren nach Anspruch 7,
**gekennzeichnet,**
durch Formen des Reifenrohlings in einer Form mit einer örtlich radial hervorstehenden Zone in der Form an dem benötigten Wulstsitzbildungsbereich und durch Einlegen des Reifens in die Form vor dem Formen, derart, daß die Verbindung, die ausgeglichen werden soll, umfangsmäßig benachbart zu der hervorstehenden Zone positioniert ist.

9. Verfahren nach Anspruch 6 oder 7,
**gekennzeichnet** durch ein Entfernen von unvulkanisiertem Gummi in dem betreffenden Bereich vor dem Formen des Reifenrohlings in einer Form.

10. Verfahren nach Anspruch 6,
**gekennzeichnet** durch ein Anlegen eines dünnen Streifens einer Gummizusammensetzung um einen Teil der Umfangserstreckung eines Reifenwulstbereiches derart, daß benachbart der Verbindung, die ausgeglichen werden soll, kein Streifen angelegt wird und durch das nachfolgende Formen des Reifens in einer Form.

11. Verfahren zur Herstellung nach Anspruch 6,
**gekennzeichnet** durch ein Entfernen von Gummi aus dem betreffenden Bereich nach dem Formen des Reifens.

## Revendications

1. Pneumatique à carcasse radiale, comprenant des éléments qui comportent une bande de roulement (8), une armature à nappe sommet (9) placée sous la bande de roulement (8), et une carcasse formée de câblés d'armature disposés radialement, un élément au moins comprenant une bande d'un matériau placé circonférentiellement et raccordé à ses extrémités pour la formation d'un joint, les câblés d'armature de la carcasse étant fixés, dans chacune de deux parties de talon (2) par enroulement autour d'une tringle (3), la région de talon (3) étant enrobée dans un caoutchouc pour la formation d'une région (11) de siège de talon placée radialement vers l'intérieur de la tringle (3) et destinée à être appliquée contre une jante de roue, caractérisé en ce que la région (11) de siège de talon formée de caoutchouc a une épaisseur de caoutchouc, mesurée radialement par rapport au pneumatique et sous la tringle (3), qui est plus faible dans une région circonférentielle disposée radialement vers l'intérieur d'une zone de la bande adjacente circonférentiellement au joint, que l'épaisseur du caoutchouc dans la partie de la région (11) de siège de talon qui se trouve radialement à l'intérieur d'une zone qui n'est pas adjacente circonférentiellement au joint.

2. Pneumatique selon la revendication 1, caractérisé en ce que l'épaisseur plus faible est inférieure d'une valeur comprise entre 0,5 et 1,5 mm.

3. Pneumatique selon la revendication 1 ou 2, caractérisé en ce que la région de plus faible épaisseur est disposée, en direction circonférentielle, sur une distance de 10 à 40° autour du pneumatique.

4. Pneumatique selon la revendication 1, 2 ou 3, caractérisé en ce que deux régions de plus faible épaisseur de caoutchouc sont formées de manière qu'elles soient adjacentes chacune à un joint d'un ou plusieurs éléments du pneumatique.

5. Pneumatique selon la revendication 1, 2, 3 ou 4, caractérisé en ce que la région de plus faible épaisseur de caoutchouc se trouve sous le joint de la bande de roulement (TJ).

6. Procédé de fabrication d'un pneumatique ayant une région d'épaisseur de caoutchouc plus faible, disposée radialement vers l'intérieur d'une tringle (3) d'armature de talon, le procédé comprenant la mise de la surface radialement interne du talon du pneumatique à une configuration lui donnant un plus grand rayon (R') dans une région localisée (L).

7. Procédé de fabrication selon la revendication 6, caractérisé en ce que la région (L) de plus grand rayon est fabriquée par déplacement de caoutchouc de ladite région d'une carcasse de pneumatique non vulcanisé.

8. Procédé selon la revendication 7, caractérisé par le moulage d'un pneumatique non vulcanisé dans un moule ayant une zone localisée dépassant radialement dans le moule dans la région de formation de siège de talon, et le positionnement du pneumatique dans le moule avant le moulage, le joint à compenser étant placé circonférentiellement près de ladite zone en saillie.

9. Procédé selon la revendication 6 ou 7, caractérisé par l'enlèvement de caoutchouc non vulcanisé dans la région nécessaire avant le moulage du pneumatique non vulcanisé dans un moule.

10. Procédé selon la revendication 6, caractérisé par l'application d'une mince bande d'une composition de caoutchouc autour d'une partie de l'étendue circonférentielle d'une région de talon du pneumatique de manière qu'aucune bande ne soit appliquée près du joint à compenser, puis par moulage du pneumatique dans un moule.

11. Procédé de fabrication selon la revendication 6, caractérisé par l'enlèvement du caoutchouc de la région nécessaire après le moulage du pneumatique.
